# EUROPÄISCHE PATENTSCHRIFT

(11) **EP 3 147 178 B1**
(45) Veröffentlichungstag und Bekanntmachung des Hinweises auf die Patenterteilung: **26.02.2020**
(21) Anmeldenummer: 16187863.2
(22) Anmeldetag: 08.09.2016
(51) Int. Cl.: B62B 7/08, B62B 7/06

(54) **BUGGY**
BUGGY
BUGGY

(30) Priorität: 11.09.2015 DE 102015115396
(43) Veröffentlichungstag der Anmeldung: 29.03.2017
(73) Patentinhaber: Bumbleride Inc., San Diego, CA 92101 (US)
(72) Erfinder: Reichardt, Matthew, San Diego, 92107 (US); Downes, Michael, Coronado, CA 92118 (US); Todter, Chris, San Diego, 92107 (US)
(74) Vertreter: Fritz, Edmund Lothar

(56) Entgegenhaltungen:
- EP-A1- 2 368 784
- EP-A2- 1 982 895
- US-A- 6 095 548

## Beschreibung

Die vorliegende Erfindung betrifft einen Buggy oder Kinderwagen umfassend einen oberen Schieberahmen, einen unteren Schieberahmen, an dem die Vorderräder angebracht sind, wobei oberer Schieberahmen und unterer Schieberahmen in der aufgerichteten Fahrposition des Buggys in der Seitenansicht gesehen in etwa miteinander fluchten, sowie einen Hinterrahmen, an dem die Hinterräder angebracht sind, welcher in der Fahrposition in der Seitenansicht gesehen jeweils in einem Winkel zu den Schieberahmen ausgerichtet ist, wobei der Buggy aus der Fahrposition um Gelenke in eine Transportposition zusammenklappbar ist, in der oberer Schieberahmen, unterer Schieberahmen und Hinterrahmen vergleichsweise flach aufeinander liegen.

Aus dem Stand der Technik sind Buggy oder Kinderwagen der vorgenannten Art grundsätzlich bekannt. Beispielsweise in der WO 2005012738 A1 ist ein solcher Buggy beschrieben, wobei in Figur 1 dessen Fahrgestell dargestellt ist. Bei diesem bekannten Buggy schwenken beim Zusammenklappen die drei Teile des Fahrgestells, nämlich der obere Schieberahmen, der untere Schieberahmen und der Hinterrahmen um eine einzige gemeinsame Gelenkachse, die sich in Querrichtung des Fahrgestells erstreckt. Dies setzt voraus, dass die mit den einzelnen Rahmenteilen des Fahrgestells verbundenen etwa scheibenförmigen Gelenkteile in Richtung der Gelenkachse gesehen hintereinander angeordnet sind.

In der Regel erfolgt das Zusammenklappen bei Buggys dieses Typs derart, dass nach Lösen der Gelenksperre der obere Schieberahmen nach hinten in Richtung auf den Hinterrahmen geschwenkt wird. Diese Variante hat den Nachteil, dass die aus textilen Materialien bestehenden Elemente der Abdeckhaube (canopy) oder des Sitzbereichs in der zusammengeklappten Stellung mit dem Boden in Berührung kommen und so verschmutzen können.

Es gibt auch Buggys mit einem eingangs genannten prinzipiellen Aufbau des Fahrgestells, bei denen das Zusammenklappen so erfolgt, dass der obere Schieberahmen nach vorn in Richtung auf den unteren Schieberahmen geschwenkt wird. Bei dieser Variante kann es aber dazu kommen, dass der Benutzer sich beim Zusammenklappen zwischen sich aufeinander zu bewegenden Streben der Teile des Fahrgestells die Finger einklemmt, so dass es zu Verletzungen kommt. Document US6095548 beschreibt einen Kinderwagen bei dem die Hinterradunterstützung mit ihrem oberen Endabschnitt durch mehrere Nieten an einem Zahnsegment fest angebracht ist. Das Zahnsegment ist an inneren und äußeren Platten und zwischen diesen angelenkt, um sich relativ zu ihnen um einen Schwenkstift zu drehen. Die Zahnsegmente sind in der Weise in Eingriff, dass eine Drehung im Gegenuhrzeigersinn der Griffunterstützung eine Drehung im Uhrzeigersinn der Hinterradunterstützung bewirkt, um den Sportwagen zusammenzuklappen.

Die Aufgabe der vorliegenden Erfindung besteht darin, einen Buggy oder Kinderwagen mit den Merkmalen der eingangs genannten Gattung zur Verfügung zu stellen, der eine Bewegung des oberen Schieberahmens in Richtung auf den unteren Schieberahmen des Fahrgestells beim Zusammenklappen vorsieht, wobei aber die Konstruktion im Gelenkbereich derart gewählt ist, dass Verletzungen des Benutzers beim Zusammenklappen vermieden werden.
Die Lösung dieser Aufgabe liefert ein Buggy oder Kinderwagen der eingangs genannten Gattung mit den kennzeichnenden Merkmalen des Hauptanspruchs.
Erfindungsgemäß sind Gelenkeinheiten vorgesehen, an denen das jeweils diesen zugewandte Ende einer Strebe des oberen Schieberahmens einerseits und das jeweils diesen zugewandte Ende einer Strebe des Hinterrahmens andererseits um zueinander parallele Gelenkachsen schwenkbar angebracht sind
Durch die erfindungsgemäße Lösung gelingt es, Verletzungen bei einer Konstruktion, bei der sich beim Zusammenklappen die Streben des oberen Schieberahmens in Richtung auf die Streben des unteren Schieberahmens bewegen, zu vermeiden. Dabei ist es insbesondere vorteilhaft, wenn gemäß einer bevorzugten Weiterbildung der Erfindung eine Gelenkabdeckung an den Gelenkeinheiten vorgesehen ist, die beim Zusammenklappen des Buggys in die Transportstellung ein Einklemmen eines Körperteils des Benutzers zwischen den sich aufeinander zu bewegenden Streben in deren Zwischenraum verhindert, da die jeweiligen Enden der Streben in Gelenknähe benutzerseitig voneinander beabstandet sind
Gemäß der Erfindung wird zudem vorgeschlagen, dass das der Gelenkeinheit zugewandte Ende der Strebe des oberen Schieberahmens und das der Gelenkeinheit zugewandte Ende der Strebe des Hinterrahmens im Bereich der Gelenkeinheit über Getriebemittel miteinander verbunden sind, derart, dass bei einer Schwenkbewegung der Strebe des oberen Schieberahmens in einem ersten Drehsinn eine Schwenkbewegung der Strebe des Hinterrahmens im entgegengesetzten Drehsinn resultiert. Bei dieser konstruktiven Variante genügt es, dass der Benutzer die Strebe des oberen Schieberahmens nach Lösen einer Verriegelung schwenkt, wodurch die Strebe des Hinterrahmens automatisch mitschwenkt und das Fahrgestell des Buggys bequem in einer einzügigen Bewegung in die Transportstellung flach zusammengeklappt wird.
Vorzugsweise ist das der Gelenkeinheit zugewandte Ende der Strebe des unteren Schieberahmens an der Gelenkeinheit fest angebracht, so dass beim Zusammenklappen die Streben des unteren Schieberahmens, an dem sich die Vorderräder befinden, mit den Gelenkeinheiten schwenken.

Weiterhin ist als Getriebemittel wenigstens ein erstes Zahnrad vorgesehen, welches sich um die Gelenkachse der Strebe des oberen Schieberahmens dreht, sowie wenigstens ein zweites Zahnrad, welches sich um die dazu parallele Achse der Strebe des Hinterrahmens dreht. Beide Zahnräder greifen ineinander und bewirken, dass beim Schwenkdes des oberen Schieberahmens auch der Hinterrahmen, an dem sich die Hinterräder befinden, in Richtung auf den unteren Schieberahmen schwenkt.
Weiterhin ist vorzugsweise, um die Gelenkeinheiten zu Entsperren, wenigstens ein Bauelement, insbesondere ein Haken vorgesehen, welches nach Lösen eines Eingriffs mit Verriegelungselementen ein Entriegeln der Gelenkeinheiten und somit ein Schwenken der Streben und Zusammenklappen des Buggy in die flache Transportstellung ermöglicht. Diese Konstruktion ermöglicht ein einfaches Handhaben und rasches Zusammenklappen des Buggys mit nur wenigen Hadngriffen.

Gemäß der Erfindung kann der Haken mittels wenigstens eines Zugelements entgegen eine Federkraft aus dem Eingriff mit den Verriegelungselementen bringbar sein, so dass nach dem Loslassen des Zugelements der Haken sich wieder in die Eingriffstellung zurück bewegt.

Es ist weiterhin vorgesehen, dass als Verriegelungselemente (Stifte oder dergleichen an Zahnradeinheiten vorhanden sind, die mit Klinken und/oder Ringnuten als Anschlagelemente an wenigstens einer Basisplatte der Gelenkeinheit zusammenwirken. Hierdurch kann zum einen die Festlegung in der aufrechten Fahrposition bewirkt werden und gegebenenfalls durch weitere Verriegelungselemente auch eine Begrenzung des Schwenkwegs in der flachen Transportstellung und eine Verriegelung der Gelenkeinheiten auch in dieser Position.
Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine Ansicht eines Buggys gemäß einer beispielhaften Variante der vorliegenden Erfindung in der aufgeklappten Fahrposition;
Figur 2 eine vergrößerte Detailansicht einer Gelenkeinheit, die die Streben des Fahrgestells gelenkig miteinander verbindet, in einer Stellung, die der aufgeklappten Fahrposition gemäß Figur 1 entspricht;
Figur 3 eine Explosionsdarstellung der Gelenkeinheit;
Figur 4 eine vergrößerte Detailansicht des Gelenkbereichs von der rechten Seite her gesehen;
Figur 5 eine ähnliche Detailansicht des Gelenkbereichs von der linken Seite her gesehen;
Figur 6 eine weitere Detailansicht, die die Entsperrung des Gelenks erläutert;
Figur 7 eine entsprechende Ansicht wie in Figur 6, jedoch von der anderen Seite her gesehen;
Figur 8 eine weitere Detailansicht des Gelenkbereichs;
Figur 9 eine Ansicht, die ein Detail aus Figur 8 zeigt;
Figur 10 eine weitere seitliche Ansicht des Gelenkbereichs;
Figur 11 eine Ansicht eines Details aus Figur 10, wobei es sich um eine Ansicht von der anderen Seite des Gelenks gesehen handelt.

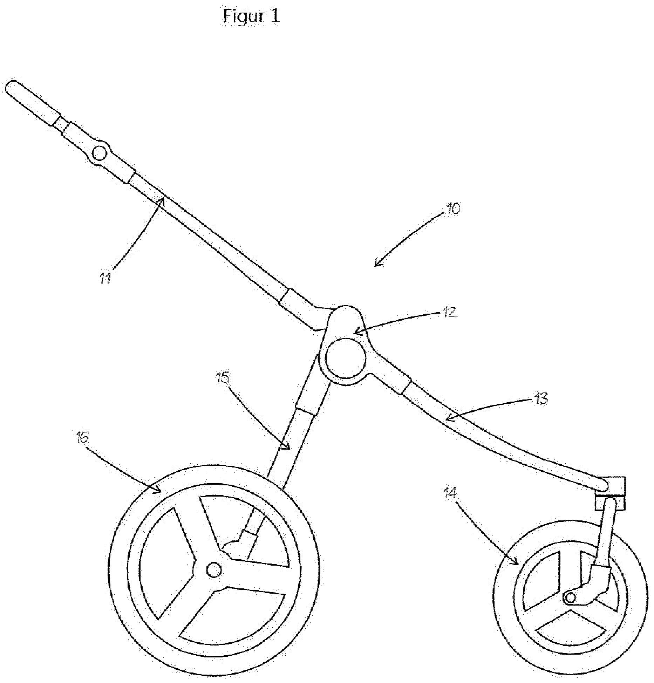

Nachfolgend wird zunächst auf die Figur 1 Bezug genommen. Diese zeigt den mit dem Bezugszeichen 10 bezeichneten erfindungsgemäßen Buggy in einer schematisch vereinfachten Seitenansicht in der aufgeklappten Fahrposition. Das Fahrgestell des Buggys umfasst einen oberen Schieberahmen, der in der Vorderansicht gesehen im Prinzip etwa U-förmig ist, mit einer hier nicht erkennbaren oberen Querverbindung und weiterhin jeweils an beiden Seiten jeweils eine sich nach unten hin erstreckende Strebe 11 aufweist, die sich bis zu der Gelenkeinheit 12 hin erstreckt. Jenseits der Gelenkeinheit 12 setzt sich das Fahrgestell des Buggys in dem unteren Schieberahmen fort, dessen Strebe 13 etwa in einer Flucht mit der Strebe 11 des oberen Schieberahmens verläuft, wobei diese Strebe 13 mit der Gelenkeinheit 12 fest verbunden sein kann. Derartige zueinander parallel Streben sind wiederum an beiden Seiten des Buggys vorhanden. Am unteren Ende der Streben 13 des unteren Schieberahmens sind die Vorderräder 14 montiert. Die Streben 11 des oberen Schieberahmens sind mit der Gelenkeinheit 12 gelenkig verbunden und zwar um eine horizontale Achse, die sich in Querrichtung des Buggys erstreckt. Weiterhin sind mit der Gelenkeinheit 12 Streben 15 des Hinterrahmens jeweils mit ihrem oberen Ende gelenkig verbunden. Am unteren Ende dieser Streben 15 des Hinterrahmens sind die Hinterräder 16 des Buggys montiert. Die Streben 15 des Hinterrahmens erstrecken sich in der in Figur 1 gezeigten Fahrposition jeweils in einem Winkel zu den Streben 11 des oberen Schieberahmens und zu den Streben 13 des unteren Schieberahmens.

Das Zusammenklappen des Buggys aus der in Figur 1 gezeigten Fahrposition in die flach zusammengelegte Transportposition erfolgt derart, dass der obere Schieberahmen in Richtung des Pfeils auf den unteren Schieberahmen 13 zu bewegt wird und die Strebe 11 daher in der Zeichnung im Uhrzeigersinn schwenkend auf die Strebe 13 zu bewegt wird. Hingegen schwenkt die Strebe 15 des Hinterrahmens in Richtung des unteren Pfeils in Figur 1 auf die Strebe 13 des unteren Schieberahmens 13 zu und schwenkt somit im entgegengesetzten Drehsinn wie die Strebe 11 des oberen Schieberahmens. Die Streben des Rahmeneinheiten des Fahrgestells sind in der Gelenkeinheit 12 über Getriebemittel so miteinander verbunden, dass sich bei der Bewegung des Zusammenklappens beim Schwenken der Strebe 11 des oberen Schieberhamens eine zwangsläufige Kopplung mit der Schwenkbewegung der Strebe 15 des Hinterrahmens ergibt und letztere sich somit auf die Strebe 13 des unteren Schieberahmens zu bewegt, bis die zusammengeklappte Transportstellung erreicht ist, in der die Streben 11, 13, 15 nahezu parallele zueinander liegen, so dass die Transportstellung sehr flach ist.

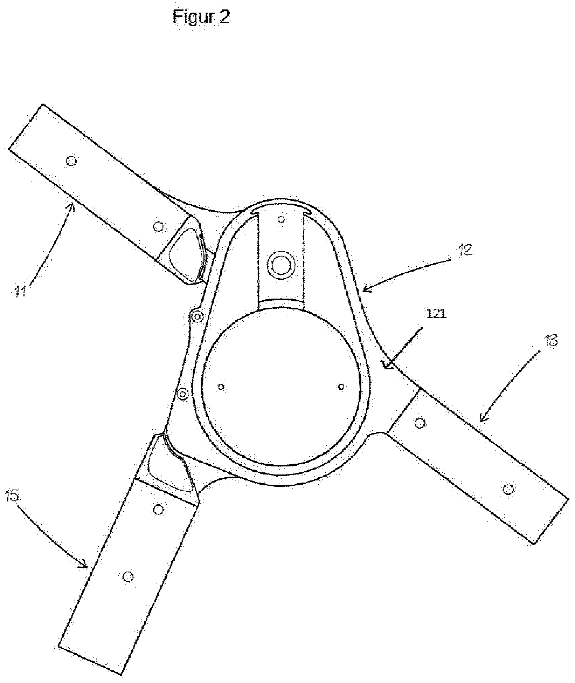

Die Funktionsweise und der Aufbau der Gelenkeinheit 12 und die vorgenannten Getriebemittel werden nachfolgend anhand der weiteren Zeichnungen im Detail erläutert. Figur 2 zeigt eine schematische vergrößerte Seitenansicht der Gelenkeinheit 12, bei der man die von dieser abgehende Strebe 11 des oberen Schieberahmens, die von dieser abgehende Strebe 15 des Hinterrahmens und die von der Gelenkeinheit abgehende Strebe 13 des unteren Schieberahmens erkennt. Die Gelenkeinheit hat eine Gelenkabdeckung 121, so dass sich beim Zusammenklappen des Buggys in die Transportstellung nicht die Gefahr ergibt, dass der Benutzer sich zwischen den sich aufeinander zu bewegenden Streben 11 und 13 bzw. 15 und 13 in dem Zwischenraum die Finger einklemmt. Man sieht, dass die Gelenkeinheit 12 dies verhindert, da die jeweiligen Enden der Streben in Gelenknähe benutzerseitig voneinander beabstandet sind.

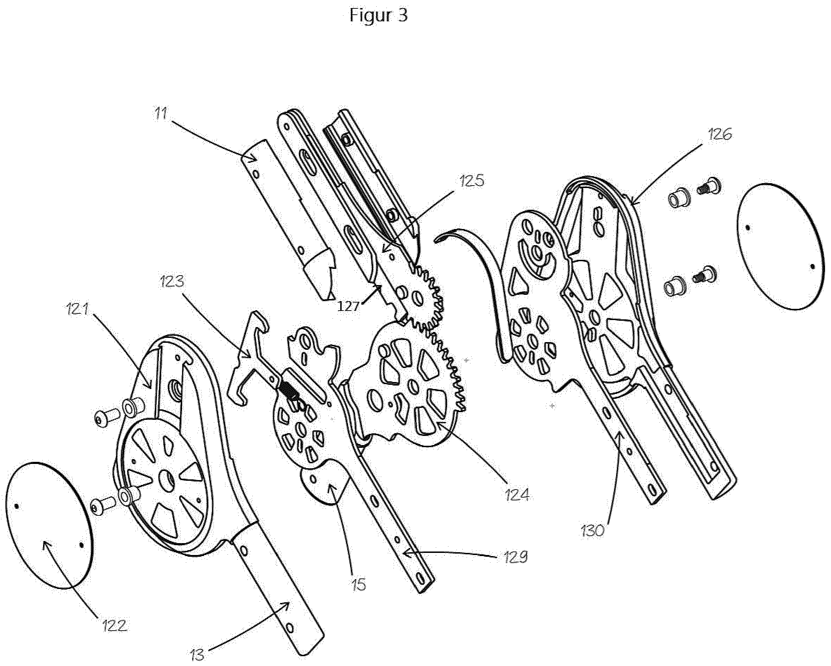

Figur 3 zeigt eine Explosionsansicht einer Gelenkeinheit 12. Man sieht hier, dass die Strebe 13 des unteren Schieberahmens, die zum Vorderrad führt, etwa radial/tangential zur Gelenkachse angeordnet und mit der Gelenkabdeckung 121 fest verbunden ist. Sichtseitig hat die Gelenkeinheit einen Deckel 122. In Richtung der Gelenkachse gesehen befindet sich hinter der Gelenkabdeckung 121 ein Haken 123 mittels dessen man das Gelenk Entsperren kann, wenn der Buggy zusammengeklappt werden soll. Das Entsperren kann erfolgen, indem man an dem Haken 123 zieht. Dazu ist ein Zugelement 127 vorhanden, dessen Funktion weiter unten noch näher erläutert wird. Mit der Strebe 15 des Hinterrahmens ist ein Zahnradteil mit einem ersten größereren Zahnrad 124 verbunden, welches sich um die Hauptachse des Gelenks dreht. Weiterhin ist ein zweites Zahnradteil 125 mit einem kleineren Zahnrad vorgesehen, welches mit dem ersten Zahnrad 124 kämmt und welches sich folglich im entgegengesetzten Drehsinn dreht wie das erste größere Zahnrad, so dass erreicht wird, dass bei der Schwenkbewegung der Strebe 11 des oberen Schieberahmens die mit dem Zahnradteil 124 verbundene Strebe 15 des Hinterrahmens im entgegengesetzten Drehsinn schwenkt und sich mitbewegt. Ferner umfasst die Gelenkeinheit eine kleinere Basisplatte 129, angeordnet zwischen der Gelenkabdeckung 121 und dem Zahnradteil 124, sowie eine größere zweite Basisplatte 130, die vor der zweiten Gelenkabdeckung 126 angeordnet ist.

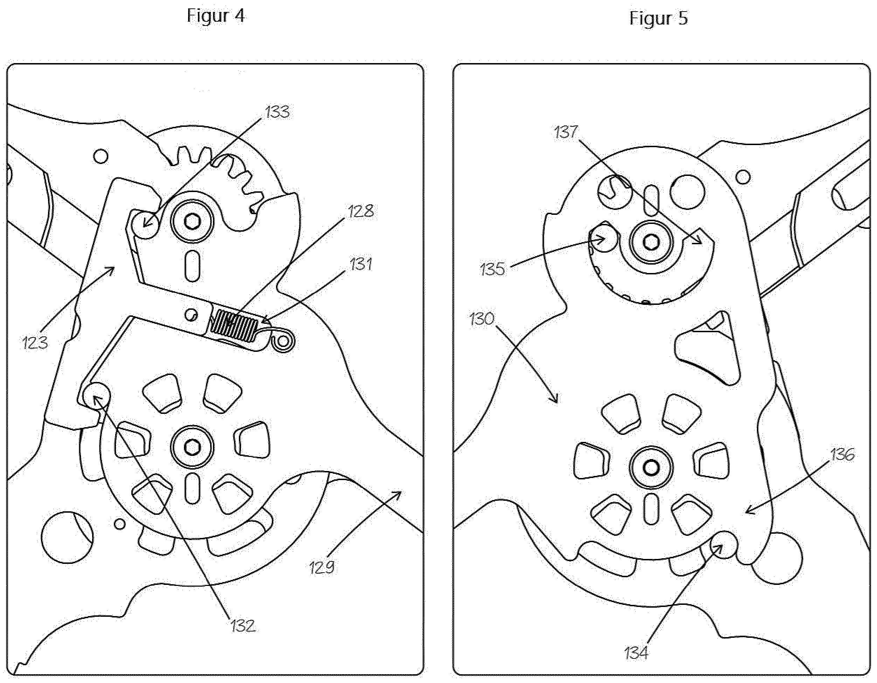

Nachfolgend wird auf die Figuren 4 und 5 Bezug genommen. Dort sieht man, dass der Haken 123 mit einer Feder 128 verbunden ist und in eine Aussparung 131 in der kleineren Basisplatte 129 eingreift. Weiterhin ist ein erster Verriegelungsstift 132 sowie ein zweiter Verriegelungsstift 133 vorgesehen, die jeweils abgewinkelte Enden des Hakens 123 übergreifen, wobei der erste Verriegelungsstift 132 sich an der ersten Zahnradeinheit 124 befindet (siehe Figur 3) und in eine Klinke an der kleinen Basisplatte 129 eingreift, während der zweite Verriegelungsstift 133 sich an der zweiten Zahnradeinheit 125 befindet und in eine Klinke an der zweiten größeren Basisplatte 130 eingreift. Auf diese Weise lassen sich über die Verriegelungsstifte 132, 133 mittels des Hakens 123 beide Zahnräder sperren und somit lässt sich das Schwenken aller Streben 11, 13 und 15 verhindern.

Figur 5 zeigt, dass sich auf der jeweils anderen Seite der Zahnradeinheiten sekundäre Verriegelungsstifte 134 (an der Zahnradeinheit 124) bzw. 135 (an der kleinere Zahnradeinheit 125) befinden können, wobei der Verriegelungsstift 134 unter eine Klinke 136 der großen Basisplatte 130 greift und der Verriegelungsstift 135 in eine Ringnut 137 der großen Basisplatte 130 eingreift.

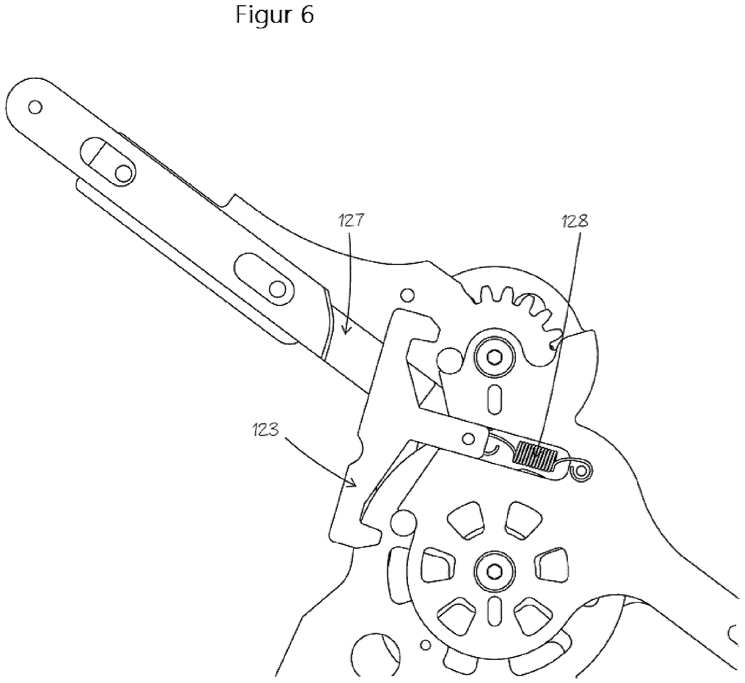

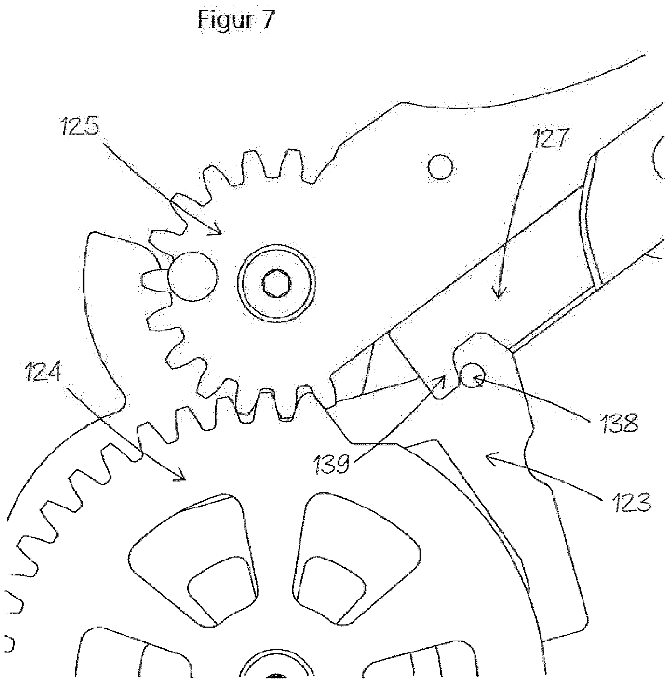

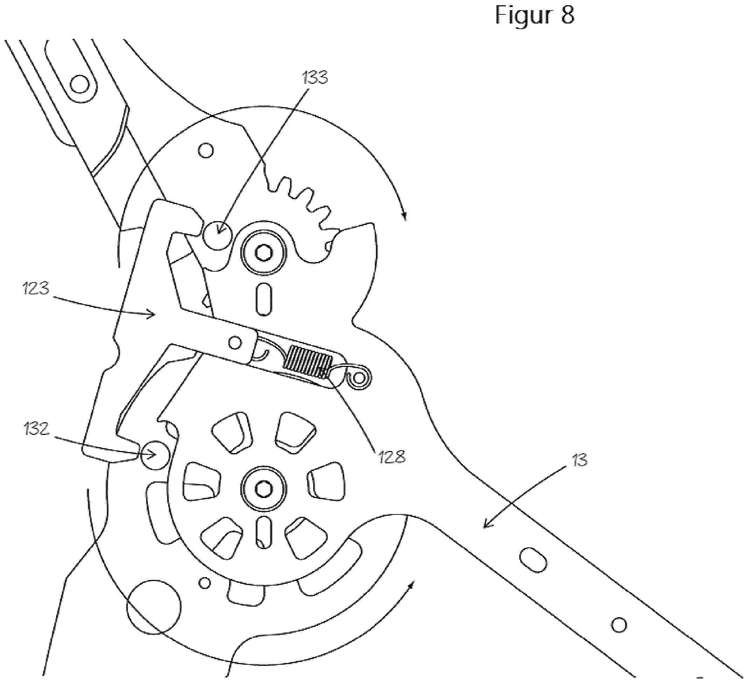

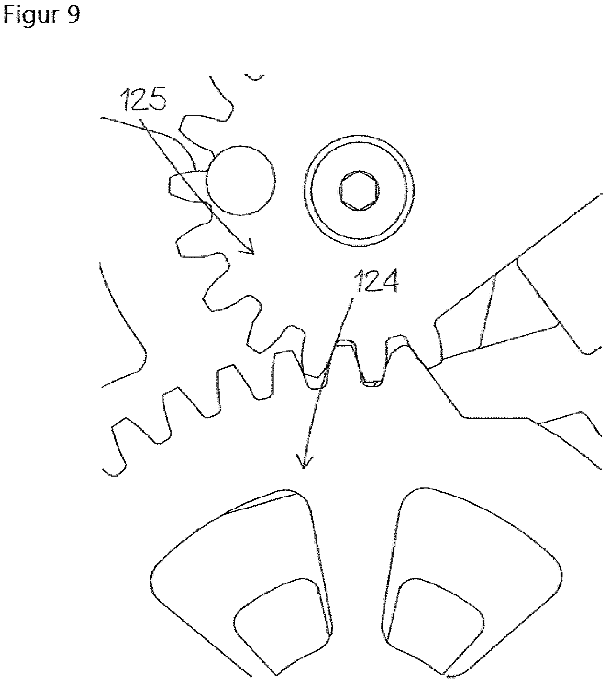

In den Figuren 6 und 7 erkennt man, dass man mittels des Zugelements 127 den Haken 123 entgegen die Kraft der Feder 128 in Richtung des Pfeils herausziehen kann, um den Eingriff mit den diversen Verriegelungsstiften zu lösen. Wie aus Figur 7 erkennbar, greift dazu das Zugelement 127 mit einer Nase 139 hinter einen Stift 138 am Haken 123. Nachdem der Haken 123 heraus gezogen ist, können die Basisplatten 129 und 130 des Gelenks frei drehen. Die Feder 128 zieht den Haken 123 nach dem Passieren der Verriegelungsstifte 132, 133 in die verriegelte Stellung zurück (siehe Figur 8.) Figur 9 zeigt den Eingriff der beiden Zahnräder 124, 125, die die Getriebemittel der Gelenkeinheit darstellen.

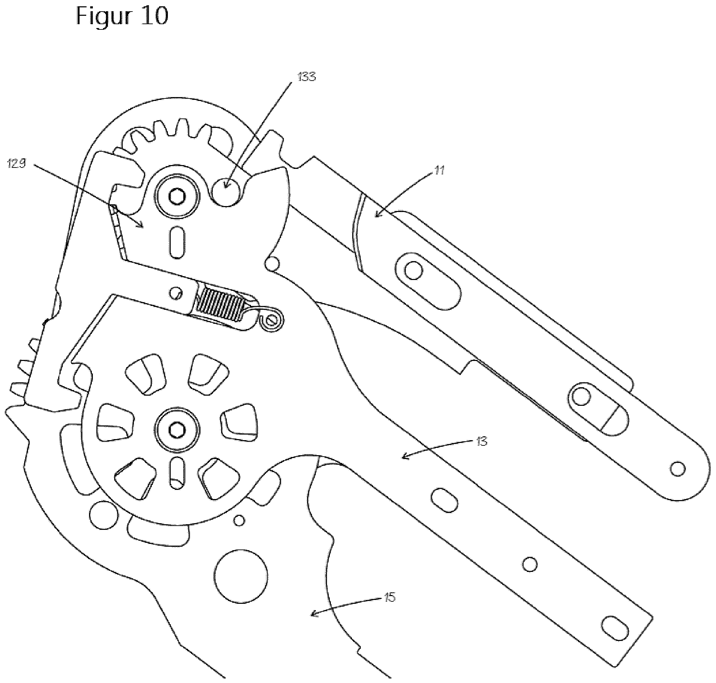

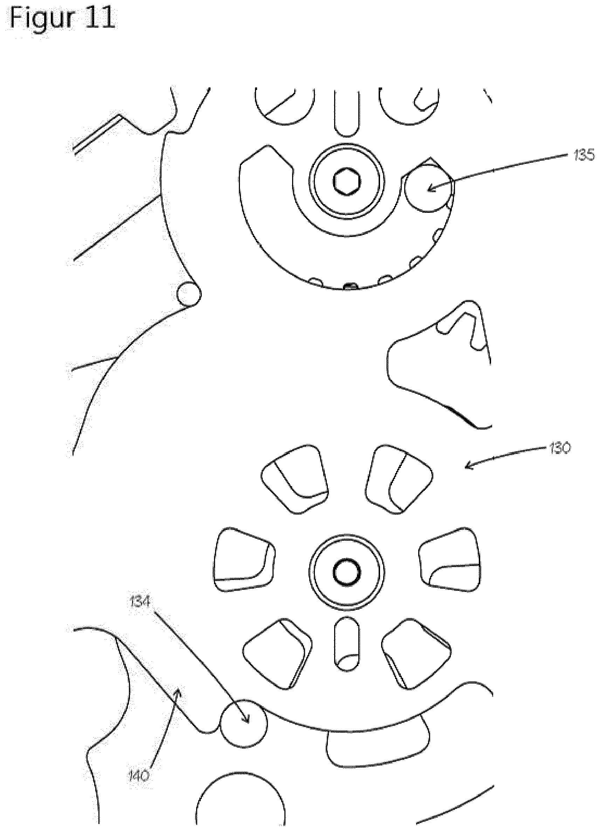

Figur 10 zeigt noch einmal den Eingriff des Verriegelungsstifts 133 an der kleinen Basisplatte 129 in der zusammengeklappten Transportstellung des Buggy, wodurch die Schwenkbewegung der Strebe 11 des oberen Schieberahmens begrenzt wird (vergleiche auch Figur 8 mit dem dort eingezeichneten Pfeil für die Schwenkrichtung.) In Figur 11 sieht man den Eingriff der sekundären Verriegelungsstifte 134, 135 in der Ringnut 137 bzw. an einer weiteren Klinke 140 der großen Basisplatte 130, wobei man durch Vergleich mit der Darstellung gemäß Figur 5 den Schwenkweg der Verriegelungsstifte 134, 135 gegenüber der Basisplatte 130 erkennen kann.

### Bezugszeichenliste

- 10: Buggy
- 11: Strebe des oberen Schieberahmens
- 12: Gelenkeinheit
- 121: Gelenkabdeckung
- 122: Deckel
- 123: Haken für die Entsperrung
- 124: Zahnradteil mit erstem großem Zahnrad
- 125: Zahnradteil mit zweitem kleinen Zahnrad
- 126: zweite Gelenkabdeckung
- 127: Zugelement
- 128: Feder
- 129: erste kleinere Basisplatte
- 130: zweite größere Basisplatte
- 131: Aussparung
- 132: Verriegelungsstift
- 133: Verriegelungsstift
- 134: Verriegelungsstift
- 135: Verriegelungsstift
- 136: Klinke
- 137: Ringnut
- 138: Stift
- 139: Nase
- 140: weitere Klinke
- 13: Strebe des unteren Schieberahmens
- 14: Vorderrad
- 15: Strebe des Hinterrahmens
- 16: Hinterrad

## Patentansprüche

1. Buggy oder Kinderwagen umfassend einen oberen Schieberahmen, einen unteren Schieberahmen, an dem die Vorderräder angebracht sind, wobei oberer Schieberahmen und unterer Schieberahmen in der aufgerichteten Fahrposition des Buggys in der Seitenansicht gesehen in etwa miteinander fluchten, sowie einen Hinterrahmen, an dem die Hinterräder angebracht sind, welcher in der Fahrposition in der Seitenansicht gesehen jeweils in einem Winkel zu den Schieberahmen ausgerichtet ist, wobei der Buggy aus der Fahrposition um Gelenke in eine Transportposition zusammenklappbar ist, in der oberer Schieberahmen, unterer Schieberahmen und Hinterrahmen vergleichsweise flach aufeinander liegen, wobei Gelenkeinheiten (12) vorgesehen sind, an denen das jeweils diesen zugewandte Ende einer Strebe (11) des oberen Schieberahmens einerseits und das jeweils diesen zugewandte Ende einer Strebe des Hinterrahmens (15) andererseits um zueinander parallele Gelenkachsen schwenkbar angebracht sind, wobei das der Gelenkeinheit (12) zugewandte Ende der Strebe (11) des oberen Schieberahmens und das der Gelenkeinheit zugewandte Ende der Strebe (15) des Hinterrahmens im Bereich der Gelenkeinheit über Getriebemittel (124, 125) miteinander verbunden sind, derart, dass bei einer Schwenkbewegung der Strebe (11) des oberen Schieberahmens in einem ersten Drehsinn eine Schwenkbewegung der Strebe (15) des Hinterrahmens im entgegengesetzten Drehsinn resultiert, wobei als Getriebemittel wenigstens ein erstes Zahnrad (125) vorgesehen ist, welches sich um die Gelenkachse der Strebe (11) des oberen Schieberahmens dreht, sowie wenigstens ein zweites Zahnrad (124), welches sich um die dazu parallele Achse der Strebe (13) des Hinterrahmens dreht, **dadurch gekennzeichnet, dass** wenigstens ein Bauelement, insbesondere ein Haken (123) vorgesehen ist, welches nach Lösen eines Eingriffs mit Verriegelungselementen (132, 133) ein Entsperren der Gelenkeinheiten und somit ein Schwenken der Streben (11, 13, 15) und Zusammenklappen des Buggy in die flache Transportstellung ermöglicht und dass als Verriegelungselemente (132, 133) Stifte oder dergleichen an Zahnradeinheiten (124, 125) vorgesehen sind, die mit Klinken (136) und/oder Ringnuten (137) als Anschlagelemente an wenigstens einer Basisplatte (130) der Gelenkeinheit zusammenwirken.

2. Buggy nach einem der Ansprüche 1, **dadurch gekennzeichnet, dass** das der Gelenkeinheit (12) zugewandte Ende der Strebe (13) des unteren Schieberahmens an der Gelenkeinheit (12) fest angebracht ist.

3. Buggy nach einem der Ansprüche 1 oder 2, **dadurch gekennzeichnet, dass** eine Gelenkabdeckung (121) an den Gelenkeinheiten (12) vorgesehen ist, die beim Zusammenklappen des Buggys in die Transportstellung ein Einklemmen eines Körperteils des Benutzers zwischen den sich aufeinander zu bewegenden Streben (11 und 13) bzw. (15 und 13) in deren Zwischenraum verhindert, da die jeweiligen Enden der Streben in Gelenknähe benutzerseitig voneinander beabstandet sind.

4. Buggy nach Anspruch 1, **dadurch gekennzeichnet, dass** der Haken (123) mittels wenigstens eines Zugelements (127) entgegen eine Federkraft aus dem Eingriff mit den Verriegelungselementen (132, 133) bringbar ist.

## Claims

1. Buggy or stroller comprising an upper sliding frame, a lower sliding frame on which the front wheels are mounted, said upper sliding frame and lower sliding frame being approximately aligned with one another in the assembled travel position of the buggy in side view, and a rear frame on which the rear wheels are mounted which is aligned in the travel position in side view at an angle to the sliding frame in each case, the buggy being collapsible about hinges from the travel position into a transport position in which the upper sliding frame, lower sliding frame and rear frame lie comparatively flat on one other, wherein hinge units (12) are provided on which the respective end of a strut (11) of the upper sliding frame facing said hinge units, on the one hand, and the respective end of a strut of the rear frame (15) facing said hinge units, on the other hand, are pivotably mounted about mutually parallel hinge axes, wherein the end of the strut (11) of the upper sliding frame facing the hinge unit (12) and the end of the strut (15) of the rear frame facing the hinge unit are connected to one another via gear means (124, 125) in the region of the hinge unit in such a manner that during a pivoting movement the strut (11) of the upper sliding frame in a first direction of rotation, a pivoting movement of the strut (15) of the rear frame in the opposite direction of rotation results, wherein at least a first gearwheel (125) is provided as the gear means, which gearwheel rotates about the gear axle of the strut (11) of the upper sliding frame, and at least one second gearwheel (124) which rotates about the axis of the strut (13) of the rear frame parallel thereto, **characterized in that** at least one assembly part, in particular a hook (123), is provided which, following the release of an engagement with locking elements (132, 133), facilitates an unlocking of the hinge units and therefore a pivoting of the struts (11, 13, 15) and collapsing of the buggy into the flat transport position and that pins or the like are provided as locking elements (132, 133) on gearwheel units (124, 125) which interact with pawls (136) and/or annular grooves (137) as stop elements on at least one base plate (130) of the hinge unit.

2. The buggy according to claim 1, **characterized in that** the end of the strut (13) of the lower sliding frame facing the hinge unit (12) is fixedly attached to the hinge unit (12).

3. The buggy according to one of claims 1 or 2, **characterized in that** a hinge cover (121) is provided on the hinge units (12) which, when the buggy is collapsed into the transport position, prevents the user from trapping any part of their body between the struts (11 and 13) or (15 and 13) moving onto one another, as the respective ends of the struts are spaced apart from one another on the user side close to the hinge.

4. The buggy according to claim 1, **characterized in that** the hook (123) can be moved by means of at least one tension element (127) against a spring force out of engagement with the locking elements (132, 133).

## Revendications

1. Landau ou poussette comprenant un châssis coulissant supérieur, un châssis coulissant inférieur, au niveau duquel les roues avant sont montées, dans lequel le châssis coulissant supérieur et le châssis coulissant inférieur, dans la position dépliée du landau en vue depuis le côté, sont approximativement alignés l'un avec l'autre, ainsi qu'un châssis arrière au niveau duquel les roues arrières sont montées lequel, dans la position de déplacement en vue depuis le côté, est respectivement orienté selon un angle par rapport aux châssis coulissants, dans lequel le landau est repliable autour d'articulations de la position de déplacement à une position de transport dans laquelle le châssis coulissant supérieur, le châssis coulissant inférieur et le châssis arrière reposent comparativement à plat les uns sur les autres, dans lequel des unités d'articulation sont prévues (12) au niveau desquelles l'extrémité, respectivement tournée vers celles-ci, d'une entretoise (11) du châssis coulissant supérieur d'une part et l'extrémité, respectivement tournée vers celles-ci, d'une entretoise du châssis arrière (15) d'autre part sont montées de façon pivotante autour d'axes d'articulation parallèles entre eux, dans lequel l'extrémité tournée vers l'unité d'articulation (12) de l'entretoise (11) du châssis coulissant supérieur et l'extrémité tournée vers l'unité d'articulation de l'entretoise (15) du châssis arrière sont reliées entre elles via des moyens moteurs (124, 125) dans la zone de l'unité d'articulation de telle sorte qu'en cas de mouvement pivotant de l'entretoise (11) du châssis coulissant supérieur dans un premier sens de rotation, il en résulte un mouvement de rotation de l'entretoise (15) du châssis arrière dans le sens de rotation contraire, dans lequel on prévoit, en guise de moyens moteurs, au moins une roue dentée (125) qui tourne autour de l'axe d'articulation de l'entretoise (11) du châssis coulissant supérieur ainsi qu'au moins une deuxième roue dentée (124) qui tourne autour de l'axe qui lui est parallèle de l'entretoise (13) du châssis arrière, **caractérisé en ce qu'**au moins un élément, en particulier un crochet (123) est prévu lequel, après la mise hors d'une prise d'avec des éléments de verrouillage (132, 133), permet un déverrouillage des unités d'articulation et ainsi un pivotement des entretoises (11, 13, 15) et un repliage du landau dans la position de transport plate et qu'en guise d'éléments de verrouillage (132, 133), on prévoit des goupilles ou similaires au niveau d'unités de roue dentée (124, 125) qui coopèrent avec des cliquets (136) et/ou rainures annulaires (137) en tant qu'éléments de butée sur au moins une plaque de base (130) de l'unité d'articulation.

2. Landau selon la revendication 1, **caractérisé en ce que** l'extrémité tournée vers l'unité d'articulation (12) de l'entretoise (13) du châssis coulissant inférieur est montée de manière fixe sur l'unité d'articulation (12).

3. Landau selon l'une des revendications 1 ou 2, **caractérisé en ce que** l'on prévoit un recouvrement d'articulation (121) au niveau des unités d'articulation (12) lequel, lors du repliage du landau dans la position de transport, empêche un coincement d'une partie du corps de l'utilisateur entre les entretoises (11 et 13) ou (15 et 13) se déplaçant l'une vers l'autre dans l'espace intermédiaire de celles-ci étant donné que les extrémités respectives des entretoises sont espacées entre elles côté utilisateur à proximité de l'articulation.

4. Landau selon la revendication 1, **caractérisé en ce que** le crochet (123) peut être amené hors de prise d'avec les éléments de verrouillage (132, 133) à l'encontre d'une force élastique au moyen d'au moins un élément de traction (127).
